Europäisches Patentamt

European Patent Office

Office européen des brevets

(19)

(11) Veröffentlichungsnummer: **0 150 377**
A2

# (12) EUROPÄISCHE PATENTANMELDUNG

(21) Anmeldenummer: 84115151.7

(22) Anmeldetag: 11.12.84

(51) Int. Cl.⁴: **B 29 C 61/10**, H 02 G 15/18

(30) Priorität: 14.12.83 DE 3345288

(43) Veröffentlichungstag der Anmeldung: 07.08.85
Patentblatt 85/32

(84) Benannte Vertragsstaaten: **AT BE CH DE FR GB IT LI NL SE**

(71) Anmelder: **Siemens Aktiengesellschaft, Berlin und München Wittelsbacherplatz 2, D-8000 München 2 (DE)**

(72) Erfinder: **Giebel, W., Dipl.-Ing.(FH), Mathildenstrasse 31 a, D-8033 Planegg (DE)**
Erfinder: **Otto, Peter, Dr.-Ing., Weinbergerstrasse 55, D-8000 Mnchen 60 (DE)**

(54) **Manschette, insbesondere für Kabelgarnituren, aus schrumpfbarem Material.**

(57) Bei der Erfindung handelt es sich um eine Manschette (1) aus schrumpfbarem Material, die sich in einfachster Weise ohne Profilgestaltung herstellen läßt. Der für die Abdichtung der Trennungslinie erforderliche Untertritt (2, 5) mit entsprechenden Beschichtungen aus Haftvermittlern (4, 4') wird nachträglich angebracht, wobei an ihm auch die Verschlußelemente (17) befestigt sein können.

Siemens Aktiengesellschaft          Unser Zeichen
Berlin und München                  VPA 83 P 1 9 4 3 E

Manschette, insbesondere für Kabelgarnituren, aus schrumpfbarem Material.

Die Erfindung betrifft eine Manschette, insbesondere für
Kabelgarnituren, aus schrumpfbarem Matgerial mit Verschlußelementen entlang der Längsseiten und mit einem den Längsschlitz überdeckenden Untertritt.

Eine derartige Manschette ist aus der europäischen Patentanmeldung EP-0 023 418 bereits bekannt. Dort sind Verschlußelemente entlang der Längsseiten angeordnet und der Längsschlitz wird von einem Untertritt, der als Verlängerung
einer Längsseite ausgebildet ist, im Inneren der Manschette
überdeckt. Hierbei ergeben sich jedoch bezüglich der Fertigung und bei der Montage während des Schrumpfvorganges unter
Umständen gewisse Schwierigkeiten. Bei der Herstellung der
Manschette muß beispielsweise dafür gesorgt werden, daß der
Untertritt mit der Fläche der darüber liegenden Längskante während der der Extrusion folgenden Verfahrensschritte
nicht zusammenklebt. Außerdem ist bereits die Extrusion
selbst durch die notwendige Bildung von Profilen erschwert.
Beim Schrumpfvorgang wirkt erschwerend, daß der Verschlußbereich am Ansatz des Untertrittes dicker ist als die übrige
Manschette, so daß hier der Wärmetransport ins Innere anders ist als in den übrigen Bereichen der Manschette. Dies
wirkt sich in diesem Bereich besonders nachteilig aus, da
gerade hier eine gleichmäßige und vollständige Aktivierung
des dort befindlichen Schmelzklebers erreicht werden muß.
Durch den behinderten Wärmetransport infolge dieser Verdickung können somit Unregelmäßigkeiten im Dichtungsbereich des Längsschlitzes entstehen.

Sef 1 Phl/ 9.12.1983

Für vorliegende Erfindung ergibt sich nun die Aufgabe, eine Manschette aus schrumpfbarem Material, insbesondere für Kabelgarnituren zu schaffen, bei der die Abdichtung des längsseitigen Verschlusses bezüglich günstiger Verhältnisse während des Schrumpfvorganges verbessert wird, wobei auch der Aufbau der Manschette bezüglich eines günstigen Herstellungsverfahrens optimiert werden soll. Die gestellte Aufgabe wird nun gemäß der Erfindung mit Hilfe einer Manschette der eingangs erläuterten Art dadurch gelöst, daß der Untertritt als selbständiges Bauteil in Form einer Folie ausgebildet und auf der zum umhüllenden Gegenstand weisenden Seite der Manschette mit Hilfe eines Haftvermittlers aufgebracht ist.

Die Erfindung weist nun gegenüber dem Stand der Technik mehrere Vorteile auf; einer davon ist, daß die Manschette aufgrund ihrer einfachen Gestaltung profilfrei im Extrusions- oder Gießverfahren hergestellt werden kann, wobei die nachfolgenden Bearbeitungsschritte ebenfalls einfacher ablaufen können. So ist zum Beispiel bei der Vernetzung wie auch bei der Reckung keine Rücksicht mehr zu nehmen auf den sonst angeformten Untertritt, der in diesen Phasen möglichst keine Beeinflussung erfahren soll. Die ungereckte Manschette besteht nun nur noch aus einem gleichmäßigen, symmetrischen Flächenteil, an dessen beiden Rändern längsverlaufende Verstärkungen für die später anzubringenden Verschlußelemente eingelagert werden. Anschließend kann die Vernetzung und Reckung erfolgen, ohne daß besondere Vorkehrungen für den Verschlußbereich getroffen werden müssen. Dies bedeutet, daß erst nach dem kritischen Verfahrensschritt der Extrusion des Manschettenmaterials zusammen mit den Verstärkungselementen der erforderliche Untertritt aufgebracht wird. Von Vorteil ist nun, daß praktisch mehr oder weniger unabhängig vom Material der Manschette das Material für den Untertritt gewählt werden kann und daß die Reckkräfte beim Aufweiten nicht mehr maßgebend für die Dimensionierung des Untertrittes sind. Das
Aufbringen des Untertrittes auf die Manschette entlang
einer Längskante ist unproblematisch und erfolgt mit Hilfe
von geeigneten Haftsystemen. Wenn der Untertritt erst nach
der Reckung aufgebracht wird, muß lediglich eine gewisse
Rückschrumpffähigkeit des Untertrittes - soweit er im gereckten Bereich aufgetragen ist - gegeben sein, während
beim Aufbringen vor dem Recken noch eine partielle Dehnfähigkeit des Untertrittes vorhanden sein muß. Durch geeignete Wahl des Haftsystems ist es jedoch auch möglich,
den Untertritt gleitend bzw. "schwimmend" aufzubringen, so
daß er bei den Dehn- bzw. Reckvorgängen keine Strukturveränderung erfährt. Weiterhin ist von Vorteil, daß der
Untertritt sehr dünn ausgebildet sein kann, zum Beispiel
in Form einer Folie oder eines Folienverbundes bzw. Folienpaketes, so daß der Verschlußbereich mit dem Untertritt
kaum aufträgt. Die Verhältnisse beim Schrumpfen sind somit
für den gesamten Manschettenbereich annähernd gleich. Der
Wärmetransport im Verschlußbereich kann sogar durch Einlagerung wärmeleitfähiger Materialien verbessert werden. Es
sind beispielsweise auch Materialien einsetzbar, mit denen
eine elektrische Schirmung zu erreichen ist, so daß je nach
Anordnung auch eine elektrisch geschirmte Ausführung herstellbar ist. Da der Untertritt gemäß der Erfindung in
jedem Fall als selbständiges Bauteil in Form einer Folie
ausgebildet ist, können beide Formteile, die Manschette
wie auch der Untertritt, optimal hinsichtlich des Materials,
des Herstellungsverfahrens und des Einsatzgebietes aufeinander abgestimmt werden. Die Verschlußelemente können nun
nach dem Herstellen der Manschette auf- bzw. eingebracht
werden, so daß sie das Herstellungsverfahren der Manschette
nicht behindern.

Die Erfindung wird nun anhand von verschiedenen Ausführungsbeispielen in zweiundzwanzig Figuren näher erläutert.

Figur 1 zeigt als Skizze eine Manschette gemäß der Erfindung in einsatzfähiger Form vor dem Schrumpfen.

Figur 2 verdeutlicht die Einfachheit der herzustellenden Manschettenform im ungeweiteten Zustand (Extrudat).

Figur 3 zeigt eine ungeweitete Manschette mit aufgebrachter Dichtschicht und integriertem Untertritt.

Figur 4 veranschaulicht das getrennte Aufbringen von Dichtschicht und Untertritt auf eine ungeweitete Manschette.

Figur 5 zeigt das Aufbringen eines in der Dichtschicht gefaßten Untertritts auf eine ungeweitete Manschette.

Figur 6 zeigt eine geweitete Manschette mit aufgebrachter Dichtschicht und integriertem Untertritt.

Figur 7 erläutert die Anordnung eines Untertritts auf einer geweiteten Manschette.

Figur 8 skizziert die Anordnung eines in der Dichtschicht eingesetzten Untertrittes bei einer geweiteten Manschette.

Figur 9 verdeutlicht in einem Ausschnitt ein weiteres Ausführungsbeispiel einer Manschette im Bereich der Befestigung des Untertrittes.

Figur 10 erläutert die Ausbildung einer Manschette mit stirnseitigen Überständen.

Figur 11 deutet die Verschlußeinheiten in den Randbereichen an.

0150377

83 P 1 9 4 3 E

Figur 12 veranschaulicht das Aufbringen der Dichtschicht mit Untertritt und darin eingebetteten Verschlußelementen.

Figur 13 zeigt die Anordnung eines Verschlußbandes auf dem Untertritt.

Figuren 14, 15 und 16 erläutern jeweils Formen von Folien, die gemäß der Erfindung als Untertritt Verwendung finden können.

Figur 17 gibt ein Beispiel für einen mehrschichtigen Untertritt im Rahmen der Erfindung.

Figur 18 veranschaulicht ein weiteres Ausführungsbeispiel nach der Erfindung vor der Befestigung des Untertritts.

Figur 19 zeigt das fertig montierte Ausführungsbeispiel nach Figur 18.

Figur 20 verdeutlicht schließlich ein Ausführungsbeispiel gemäß der Erfindung, bei dem die Längsränder der Manschette überlappend zusammengeführt sind.

Figur 21 zeigt ein Ausführungsbeispiel nach der Erfindung, bei dem der Untertritt so verlängert ist, daß er gleichzeitig als Schutzumhüllung oder als Schirmung für den umhüllten Gegenstand dient.

Figur 22 deutet die Montage einer Manschette nach Figur 21 an.

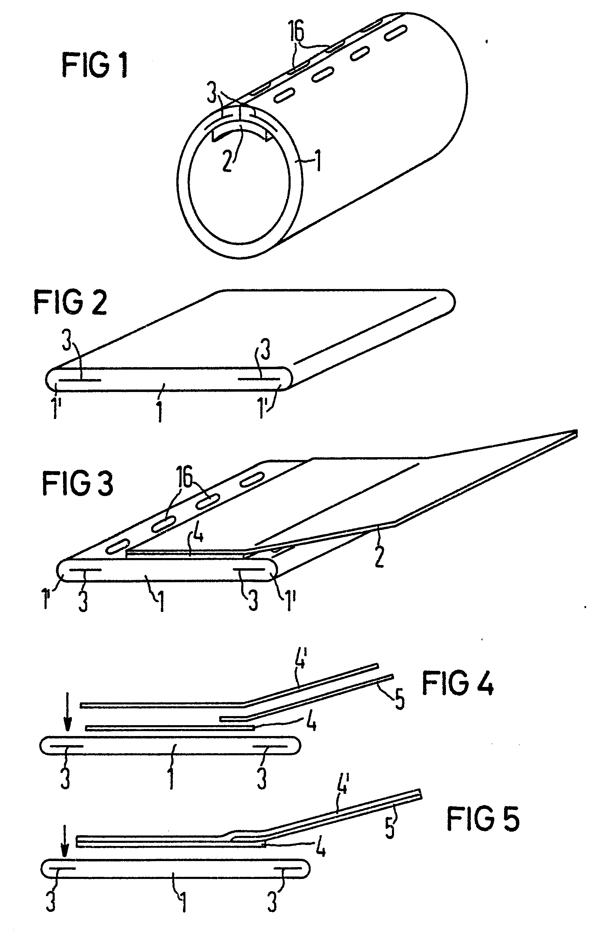

Figur 1 deutet den Einsatz einer Manschette 1 gemäß der Erfindung an, wie sie im folgenden an Einzelheiten näher er-

0150377
83 P 1 9 4 3 E

läutert wird. Die Manschette 1 wird um den zu umhüllenden Gegenstand, zum Beispiel einen Kabelspleiß, herumgelegt und mit Hilfe seiner Verschlußelemente, die in Bereichen der mit Verstärkungen 3 versehenen Rändern in den angedeuteten Langlöchern verankert werden. Der Längsschlitz zwischen den beiden Rändern der Manschette 1 wird im Inneren von einem Untertritt 2 überdeckt, der nach der Erfindung als selbständiges Bauteil auf einen der Längsränder aufgebracht wird. Dies ist schematisch in dieser Figur 1 skizziert und wird später näher erläutert. Wenn dieser Untertritt 2 als Folie ausgebildet wird, trägt er kaum auf und beeinflußt somit die Verhältnisse in diesem Bereich nicht negativ. Durch die aufgebrachte Wärme kann eine ungehinderte Aktivierung des eingebrachten Schmelzklebers, der als ein- oder zweiseitige Beschichtung aufgebracht sein kann, erfolgen, wobei die Überdeckung und Abdichtung des Längsschlitzes gewährleistet ist. Somit sind auch Beschädigungen im Verschlußbereich bezüglich der Längsdichtung zwischen dem Untertritt und der Manschette unkritisch.

In Figur 2 ist eine Manschette 1 dargestellt, wie sie gemäß der Erfindung als einfachstes Bauteil zunächst hergestellt werden kann, zum Beispiel durch Extrusion oder durch Gießen. Es sind lediglich entlang der Längsränder bereits Verstärkungen 3 eingelagert, die später der Verankerung bzw. dem Eingriff der Verschlußelemente dienen. Dieses einfache Bauteil kann nun in weiteren Verfahrensschritten vernetzt und gereckt werden und zwar in einfachster Weise, da keinerlei Unregelmäßigkeiten wie Profile oder Überdeckungen bzw. Unsymmetrien vorhanden sind. Dadurch ist man in der Wahl der zur Verfügung stehenden Verfahren völlig frei. Ebenso ist zunächst in der Wahl der Verschlußelemente frei, so daß hierüber keine Einzelheiten gegeben werden müssen. Es lassen sich sowohl Verschlußelemente einsetzen, welche die Trennungslinie übergreifen, wie auch solche, die eine

Überlappung der Längskanten erforderlich machen, wobei dann der Untertritt nicht bis zum Rand befestigt ist. Zwischen dem Untertritt und diesem Manschettenrand ergibt sich auf diese Weise eine längsverlaufende Nut, in welche der zweite Manschettenrand eingeführt und mit den Verschlußelementen eingerastet werden kann. Die Verstärkungen dienen in jedem Fall der Stabilisierung des Manschettenmaterials während des Schrumpfvorganges.

Die Figur 3 zeigt eine Manschette 1 mit dem bereits aufgebrachten Untertritt 2, der aus einer Folie als Dichtschicht besteht, wie sie im folgenden noch näher erläutert wird. Dieser Untertritt 2 wird in einem einfachen Arbeitsschritt mit Hilfe von geeigneten Haftvermittlern 4, zum Beispiel einem Schmelzkleber, auf der Seite der Manschette 1 befestigt, die später zum umhüllten Gegenstand weist. Diese Folie ist somit eine Dichtschicht im Inneren der Manschette 1, in der der Untertritt 2 integriert ist und entlang einer Längskante der Manschette 1 übersteht, so daß er im montierten Zustand den Längsschlitz überdeckt. Dieser Überstand wird dann bei der Montage unter die zweite Längskante geführt, wie die Figur 1 zeigt, und bildet somit den die Trennlinie überdeckenden Untertritt 2. Die Langlöcher 16 dienen zum Einhaken der Verschlußelemente. Hier ist der Untertritt 2 auf die noch nicht gereckte, jedoch bereits vernetzte Manschette 1 aufgebracht. Damit sind die strahlungsempfindlichen Teile, wie Kleber usw., der Vernetzung der Manschette 1 nicht mit ausgesetzt. Bei diesem Verfahren muß der Untertritt 2 jedoch reckfähig oder auf der Oberfläche der Manschette 1 gleitfähig sein, da die Manschette 1 zur Herstellung des Schrumpfvermögens erst noch einer Reckung unterzogen werden muß.

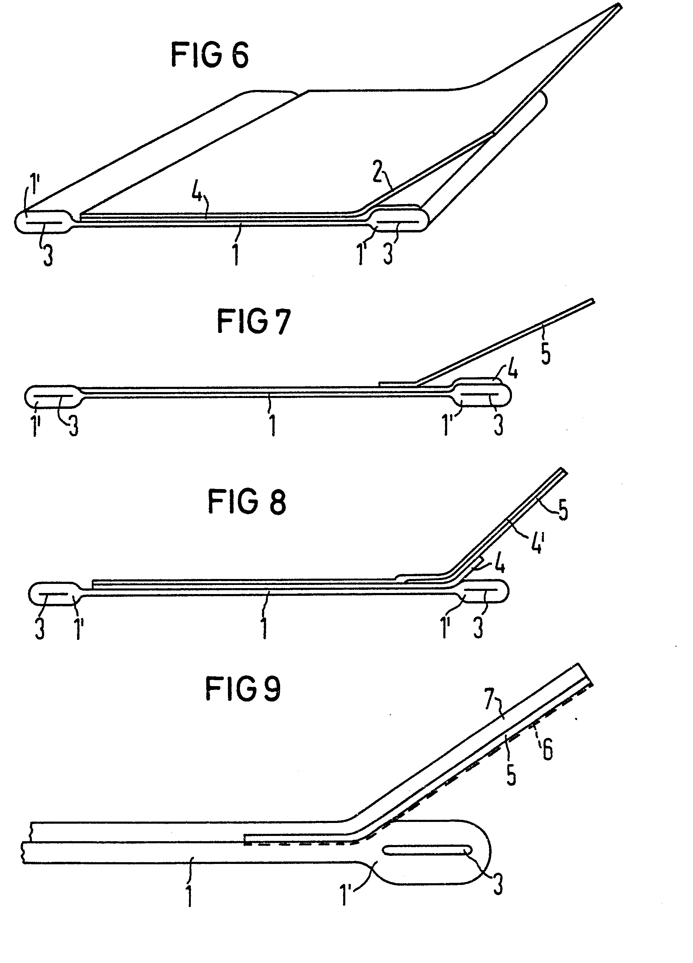

Figur 4 erläutert das Aufbringen des Untertrittes 5, wobei die ungereckte Manschette 1 zunächst mit einem Haftvermittler 4 beschichtet wird. Auf diese Anordnung wird schließlich eine weitere Schicht als Dichtschicht 4', zum Beispiel aus Schmelzkleber, aufgebracht, wobei diese beiden Schichten unter Umständen verschiedene Schmelzpunkte aufweisen können.

Eine Vereinfachung in der Herstellung der Manschette 1 mit einem nachträglich angebrachten Untertritt 5 wird in Figur 5 gezeigt. Hier wird bereits diese Kombination aus zwei Haftvermittlerschichten 4 und 4' verwendet, bei der die eine Kante der äußeren Haftvermittlerschicht 4 längsseitig nicht fest mit der inneren Haftvermittlerschicht 4' verbunden ist und somit eine Art Tasche bildet, in welcher der Untertritt 5 eingebettet ist.

In Figur 6 ist gezeigt, daß der Untertritt 2 auch auf der bereits gereckten bzw. expandierten Manschette 1 aufgebracht werden kann, wobei lediglich die Längskanten 1' nicht der Reckung unterlagen und damit ihre ursprüngliche Dicke behielten. Diese ungereckten Kantenbereiche 1' können zum Beispiel für das Fassen der Manschette 1 während des Reckverfahrens ausgenutzt werden. Man kann auch eine Anordnung wählen, bei der der Untertritt 2 in Längsrichtung über die Fläche der Manschette 1 hinaus übersteht. Bei der Montage der Manschette 1 auf dem zu umhüllenden Gegenstand werden dann die Überstände nach innen umgefaltet. Wenn das Zusammenkleben dieses umgeschlagenen Untertritt-Teils mit dem fest aufgebrachten Teil des Untertritts 2 nicht verklebt, kann bei druckgasgefüllten Anlagen eine Erhöhung des Dichtungsdruckes erzielt werden, da der nach innen umgefaltete Teil aufgrund des Innendrucks besonders stark auf den umhüllten Gegenstand aufgepreßt wird. Der Untertritt 2 kann jedoch auch nur entlang der Längskante 1' befestigt werden, wobei es gleichgültig ist, ob die gesamte oder nur ein Stück der Manschettenfläche überdeckt wird. Der Untertritt 2 kann aus einer Schmelzkleberschicht oder einer Folie aus geeignetem Material bestehen und mit Hilfe von Haftsystemen 4, wie Schmelzklebern, Kontaktklebern und Primern, die sich zum Beispiel bis in die Randbereiche 1' erstrecken, auf der Manschette 1 befestigt werden. Auch ist eine einseitige oder zweiseitige Kaschierung von Folien möglich, die zum Beispiel aus Metall bestehen. Für diese Kaschierungen werden zweckmäßigerweise Copolymere verwendet, mit deren Hilfe eine gute Haftung zum Material der Manschette 1 erreicht werden kann. Weiterhin kann der Untertritt 2 nicht nur aus einer einzigen Schicht, sondern auch aus mehreren Schichten verschiedener oder auch gleicher Materialien bestehen, die unter Umständen verschiedene Eigenschaften aufweisen. So ist beispielsweise von Vorteil, wenn Schichten von Schmelzklebern mit verschiedenen Schmelzpunkten verwendet werden, wobei der Kleber zur Manschette 1 hin einen höheren Schmelzpunkt aufweisen sollte als die Schmelzkleberschicht, die zum zu umhüllenden Gegenstand weist. Dadurch wird erreicht, daß die Aktivierung des inneren Schmelzklebers früher erfolgt als der äußere, so daß der Untertritt während des Schrumpfens an der Manschette besser positioniert bleibt.

Figur 7 zeigt die Anordnung eines einfachen Untertrittes 5 entlang einer Längskante 1 einer expandierten Manschette 1, wobei nur die Manschettenfläche mit einem Haftvermittler 4 beschichtet ist.

In Figur 8 wird eine Ausführungsform ähnlich der, die in Figur 5 gezeigt wird, beschrieben. Der Unterschied liegt lediglich darin, daß der Untertritt 5 mit den Haftvermittlerschichten 4 und 4' nicht dem Expandiervorgang der Manschette 1 unterworfen werden müssen. Dies hat dann Vorteile, wenn für den Untertritt 5 und die Haftvermittlerschichten 4 und 4' Materialien verwendet werden, die dadurch beschädigt werden könnten. Außerdem ist die Anordnung des Untertrittsystems exakter zu vollziehen, da nach dem Aufbringen zunächst keine Zustandsänderungen erfolgen.

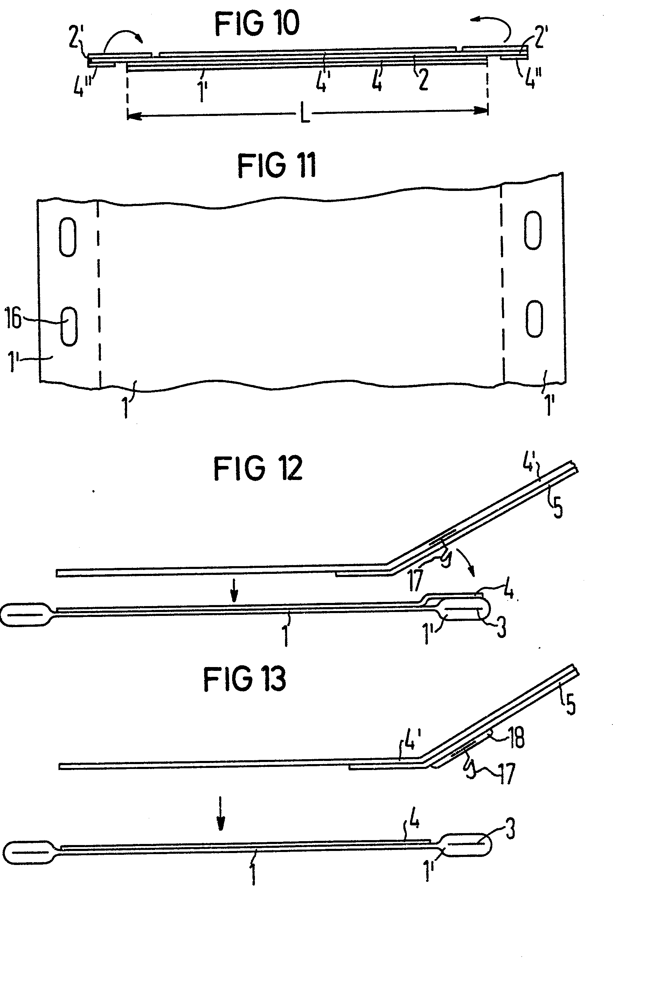

In Figur 9 wird ein Ausführungsbeispiel gemäß der Erfindung mit einem mehrschichtigen Untertritt 5 erläutert, der lediglich entlang der Längskante 1' der Manschette 1 befestigt ist. Die Befestigung dieses Untertrittes auf der Manschette 1 erfolgt entweder durch einen entsprechenden Kleber oder mit Hilfe einer Beschichtung 6 aus einem Copolymer. Die innere und später zum einzuschließenden Gegenstand weisende Schicht 7 besteht aus einer Dichtmasse, zum Beispiel Schmelzkleber, und erstreckt sich über den Untertritt 5 hinaus, zum Beispiel über die gesamte Manschettenoberfläche hinweg. In der Längskante 1' der Manschette 1 ist deutlich die eingelagerte Verstärkung 3 zum Verankern der Verschlußelemente zu erkennen. Der Untertritt 5 kann nun auch aus einer Metallfolie bestehen, doch muß dann im gereckten Bereich der Manschette 1 dafür gesorgt sein, daß diese Folie schrumpffähig ist, damit sich die Manschette 1 beim Schrumpfen ohne Behinderung zurückverformen kann. Hierfür eignen sich entsprechende, mit Ausnehmungen oder Schlitzen versehene Folien, die eine Veränderung der Querstruktur zulassen, wie sie anschließend näher beschrieben wird. Doch ist auch möglich, die Folie während des Schrumpfens auf der Manschette gleitfähig zu machen. Dies kann beispielsweise mit Hilfe einer Zwischenschicht aus einem Gleitmittel, zum Beispiel Schmelzkleber, erreicht werden. Auf diese Weise ist die Manschette 1 unbehindert vom Untertritt zurückformbar, da der Untertritt 5 gewissermaßen auf seiner Unterlage "schwimmt".

Figur 10 erläutert ein Ausführungsbeispiel, bei dem die Manschette 1 mit stirnseitigen Überständen 2' des Untertrittes 2 versehen ist. Der Untertritt 2 kann wie bereits mehrfach beschrieben, mit Kleberschichten 4 bzw. 4' beschichtet sein, wobei die Überstände 2' zumindest auf der zur Manschette 1 (hier ist nur die Längskante 1' sichtbar) von der Länge L weisenden Seite ebenfalls Kleberschichten 4" aufweisen. Nach dem Umklappen der Übertstände 2' in Pfeilrichtung ist zum Beispiel mit Hilfe einer Zwischenfolie dafür zu sorgen, daß die Überstände 2' mit der Kleberschicht 4' des Untertritts 2 zusammenkleben. Die Knicklinie des Untertritts 2 liegt dabei innerhalb der Fläche der Manschette 1, so daß diese den Untertritt 2 überragt und somit nach der Montage direkt auf den zu umhüllenden Gegenstand niedergeschrumpft werden kann. Durch die umgeklappten Überstände 2' bilden sich nun im montierten Zustand umlaufende Hohlräume aus, wobei in diesem Bereich die Überstände 2' mit ihren Kleberbeschichtungen 4" am umhüllten Gegenstand dichtend anliegen. Bei Muffen mit Innendruck, für die sich diese Ausführung besonders eignet, werden nun die Überstände 2' zusätzlich im Bereich der umlaufenden Hohlräume angepreßt, so daß infolge des Innendruckes zusätzliche Anpreßkraft im Dichtungsbereich wirkt.

Figur 11 verdeutlicht die Ausbildung der Manschette 1 entlang der Längskanten 1'. Dort sind Öffnungen 16 eingearbeitet, in welche die Verschlußelemente eingehakt bzw. eingerastet werden können. Die Verschlußelemente sind dementsprechend als Haken- oder Rastelemente ausgebildet und sind bei überlappendem Verschluß nur entlang einer Längskante 1' befestigt. Die zweite Längskante 1' wird dann mit ihren Öffnungen 16 über die erste mit Verschlußelementen versehene Längskante geknöpft. Bei nicht überlappendem Verschluß werden Verschlußelemente verwendet, welche die Teilungslinie übergreifen. Der Untertritt, der hier nicht gezeigt ist, überdeckt die Teilungslinie dichtend.

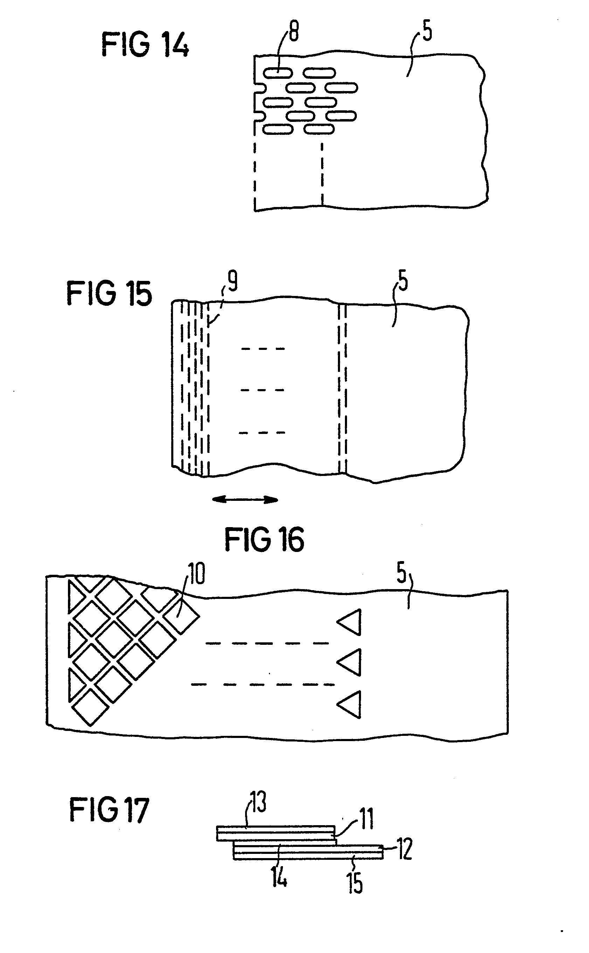

Figur 12 verdeutlicht die Montage von Verschlußelementen 17, die in diesem Fall stoffschlüssig im Untertritt 5 mit seiner Kleberbeschichtung 4' eingebettet sind. Ein so vorbereiteter Untertritt 5 kann dann in einfacher Weise in die Öffnungen 16 entlang der Längskante 1' der mit Haft-

0150377

vermittler 4 beschichteten Manschette 1 eingeknöpft werden. Auf diese Weise ergibt sich zugleich die Befestigung des gesamten Untertritts 5, so daß vor der Montage keine weitere Behandlung mehr nötig ist. Die Verschlußelemente 17 greifen durch die Öffnungen 16 soweit hindurch, daß nach der Montage die zweite Längskante 1' einknöpfbar ist.

Figur 13 zeigt eine Variante des Verschlußsystems, bei dem die einzelnen Verschlußelemente 17 auf einem eigenen Trägerband 18 aufgebracht sind, welches im Verschlußbereich auf den Untertritt 5 aufgebracht wird. Die weiteren Verhältnisse entsprechen denen aus Figur 12.

Die Figur 14 zeigt einen Untertritt 5 aus einer Metallfolie, die am Befestigungsrand mit geeigneten Ausnehmungen 8 versehen ist. Diese Ausnehmungen 8 erlauben den "Rückschrumpf" der Metallfolie, ohne daß sich funktionsschädliche Falten ausbilden. Diese Ausnehmungen 8 hängen vom verwendeten Material, von der Dicke der Folie und vom Reckgrad ab.

Figur 15 zeigt eine weitere Ausführung für die "Dehnungsfähigkeit" des Untertrittes 5 im Bereich seiner Befestigung. Hier sind längsverlaufende, kurze Schlitze 9 in Reihen hintereinander liegend und gegeneinander versetzt angeordnet, so daß sich die Folie nach der Art einer "Girlandenfaltung" quer auseinanderziehen läßt. Wenn zusätzlich eine geeignete Gleitschicht angeordnet ist, schiebt sich die Folie beim Schrumpfvorgang wieder zusammen. Die Dehnungsrichtung wird mit Hilfe eines Doppelpfeiles in der Figur angedeutet. Die offene, das heißt die gedehnte Ausbildung einer derartig gestanzten Folie soll die Figur 16 andeuten. In grober Weise soll diese Darstellung in Figur 16 zeigen, daß die Schlitze 9 aus Figur 15 nach dem Dehnen zu Aussparungen 10 werden und somit eine "Dehnung" der Folie erbringen. Mit einer derartigen Ausbildung gemäß der Erfindung lassen sich auch gewisse Abschirmprobleme lösen. Dazu wird die Metallfolie nach Art der Figur 15 gestanzt und anschließend im Bereich der expandierten Manschette 1 (zum Beispiel Figur 4) gereckt aufgebracht. Annähernd gleiches kann jedoch auch durch Aufbringen der nicht gedehnten Folie nach Figur 15 auf die ungeweitete Manschette 1 (zum Beispiel nach Figur 3) erreicht werden, wobei dann anschließend die Reckung erfolgt. Die Metallfolie wird dabei in jedem Fall in einen Kleberverband eingebettet.

Reicht die elektromagnetische Schirmfähigkeit eines solchen "Metallgeflechtes" nicht aus, so kann man einen Mehrschichten-Aufbau vornehmen, wie es in Figur 17 erläutert wird. Man setzt nun zwei oder mehrere gleiche Metallfolien 11 und 12 "auf Lücke" übereinander, wobei zwischen den einzelnen Metallfolien 11 und 12 eine "Gleitschicht" 14 erforderlich ist, die verhindert, daß sich Ausnehmungen der Metallfolien 11 und 12 beim Schrumpfen ineinander verhaken und somit den Schrumpfvorgang beeinträchtigen. Die "Gleitschicht" 14 kann beispielsweise aus Schmelzkleber bestehen oder man verwendet hierfür eine wärmebeständige Folie mit guten Gleiteigenschaften. Die Verbundschicht ist vorteilhafterweise wieder mit Schmelzkleberbeschichtungen 13 und 15 versehen, die für Haftung auf ihren Unterlagen sorgen.

Im Rahmen der Erfindung lassen sich nun verschiedenste Variationen ausbilden, wobei immer ein zunächst von der Manschette getrennter Untertritt verwendet wird, der je nach Verfahrenstechnik erst später, zum Beispiel nach der Extrusion, nach der Bestrahlung oder nach der Reckung aufgebracht wird. Auf diese Weise läßt sich die Herstellung der Manschette wesentlich vereinfachen, wie durch die Ausführungsbeispiele nach der Erfindung zu ersehen ist.

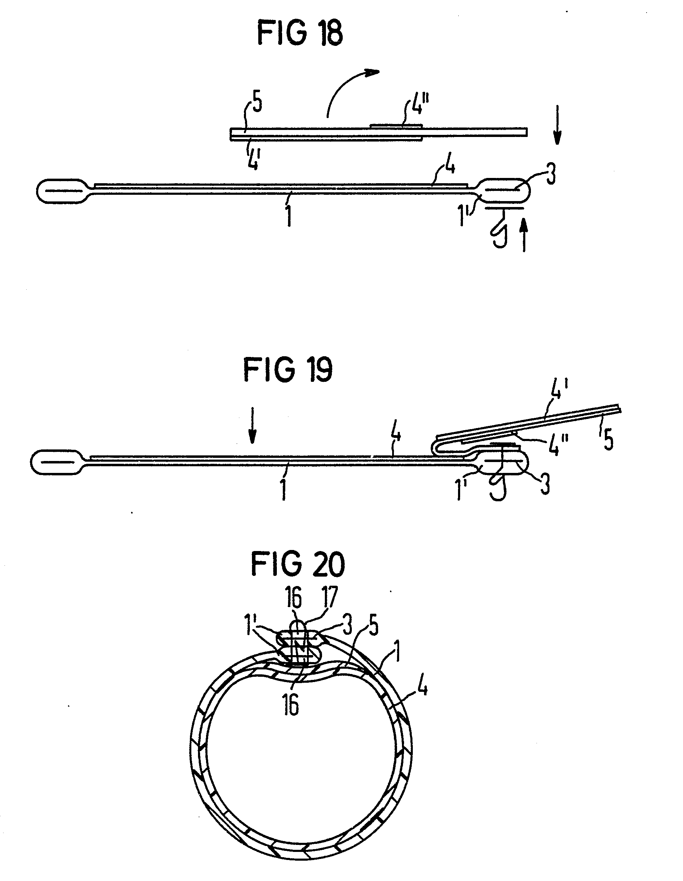

Figur 18 zeigt eine Manschette 1 mit einer Dichtschicht 4 und einem Untertritt 5, der so aufgebracht ist, daß er über die Konturen der Manschette 1 nicht hinausragt. Er ist weiterhin mit einer flächendeckenden Beschichtung 4' versehen, die im Vormontagezustand zur Dichtschicht 4 weist, mit dieser jedoch nicht zusammenhaftet. Die Befestigung dieses Untertrittes 5 erfolgt nur entlang des Längsrandes 1' der Manschette 1. Dadurch kann dieser Untertritt im Einsatzfall nach außen gefaltet werden und kann dann die eigentliche Funktion der Überdeckung des Längsschlitzes erfüllen. Eine zusätzliche Dichtschicht 4'' im Bereich des Längsrandes 1' sorgt für Abdichtung der Verschlußelemente 17.

Die Figur 19 verdeutlicht nun den Zustand der Manschette 1 nach Figur 18 vor dem Anlegen an den zu umhüllenden Gegenstand. Dieses Ausführungsbeispiel hat den großen Vorteil, daß der meist folienhafte Untertritt 5 nicht verletzt wird.

Aus Figur 20 ist ein Ausführungsbeispiel nach der Erfindung ersichtlich, bei dem die Längsränder 1' der Manschette 1 zum Verschluß überlappend angeordnet sind, wobei der Untertritt 5 den Längsschlitz überdeckt und mit Hilfe von Dichtmitteln abdichtet, wie bereits erläutert wurde. Das Verschlußelement 17 durchdringt die beiden Längsränder 1' in ihren Löchern 16 und rastet ein, so daß unbeabsichtigtes Lösen nicht mehr möglich ist.

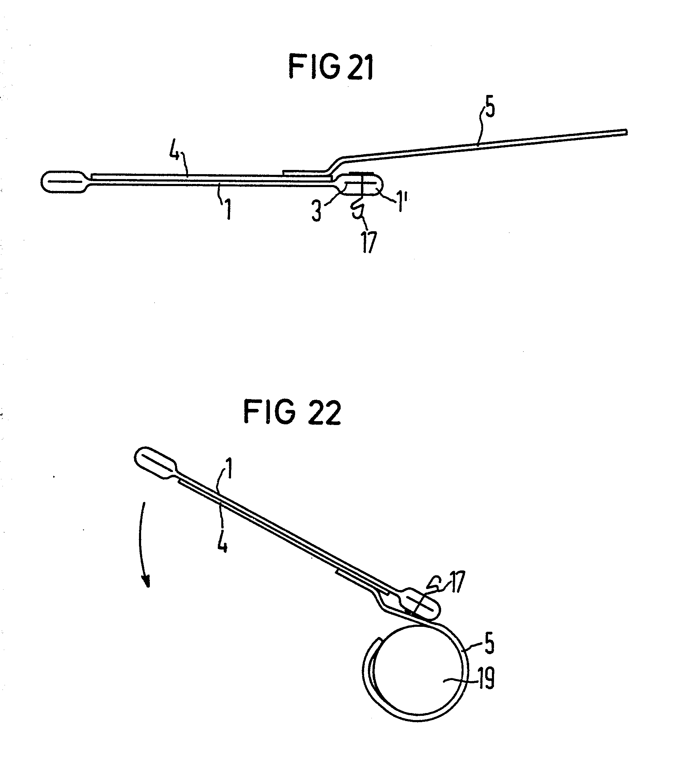

In Figur 21 wird ein Ausführungsbeispiel nach der Erfindung gezeigt, bei dem der Untertritt 5 über einen Längsrand 1' flächenhaft so weit übersteht, daß damit der zu umhüllende Gegenstand 19, zum Beispiel ein Kabelspleiß, zunächst umwickelt werden kann. Der Untertritt 5 kann dabei auch aus mehreren Schichten und verschiedenen Material-

0150377

ien bestehen, die je nach Verwendungszweck ausgewählt werden können. So ist zum Beispiel vorteilhaft, diesen verlängerten Untertritt 5 als Permeationssperre, als elektrische bzw. elektromagnetische Schirmung oder auch als Stützelement auszubilden, wenn derartige Anforderungen gestellt sind. Auf diese Weise vereinfacht sich der Aufbau und die Montage gegenüber herkömmlichen Mitteln.

Figur 22 zeigt nun den Einsatz einer Manschette 1 nach Figur 21, wobei der Untertritt 5 bereits auf dem Gegenstand 19 aufgewickelt ist. Der Pfeil deutet die Wickelrichtung für die Manschette 1 an, die anschließend mit ihrer Dichtschicht 4 - sofern sie vorhanden ist - auf den bereits gewickelten Untertritt aufgebracht und mit ihren Verschlußelementen 17 fixiert wird. Der Untertritt 5 ist zweckmäßigerweise bei einem derartigen Ausführungsbeispiel kürzer als die Manschette 1, so daß die Manschette 1 mit ihrer Dichtschicht 4 direkt auf dem umhüllten Gegenstand aufliegt und ringsum sicher abdichtet. Im Bereich der Verschlußelemente ist der Untertritt 5 allerdings bis auf die volle Manschettenlänge verlängert, da er in diesem Bereich den Längsschlitz überdecken muß. Weiterhin ist für die Haft- bzw. Dichtfähigkeit von Vorteil, wenn der Untertritt einseitig und vorzugsweise auf der äußeren Seite mit Polyethylen beschichtet ist.

44 Patentansprüche
22 Figuren

## Patentansprüche

1. Manschette, insbesondere für Kabelgarnituren, aus schrumpfbarem Material mit Verschlußelementen entlang der Längsseiten und mit einem den Längsschlitz überdeckenden Untertritt, d a d u r c h   g e k e n n z e i c h n e t , daß der Untertritt (2, 5) als selbständiges Bauteil  in Form einer Folie ausgebildet und auf der zum umhüllenden Gegenstand weisenden Seite der Manschette (1) mit Hilfe eines Haftvermittlers (4, 6) aufgebracht ist.

2. Manschette nach Anspruch 1, d a d u r c h   g e k e n n - z e i c h n e t ,  daß die Manschette (1) als unprovilierte Platte ausgebildet ist.

3. Manschette nach einem der vorhergehenden Ansprüche, d a d u r c h   g e k e n n z e i c h n e t ,  daß die Manschette (1) einer Vernetzung unterzogen ist.

4. Manschette nach einem der vorhergehenden Ansprüche, d a d u r c h   g e k e   n n z e i c h n e t ,  daß der Untertritt (2, 5) auf der ungeweiteten Manschette (1) aufgebracht ist.

5. Manschette nach einem der Ansprüche 1 bis 3, d a d u r c h   g e k e n n z e i c h n e t ,  daß der Untertritt (2, 5) auf der expandierten Manschette (1) aufgebracht ist.

6. Manschette nach einem der vorhergehenden Ansprüche, d a d u r c h   g e k e n n z e i c h n e t ,  daß der Untertritt (2, 5) mit Hilfe eines Schmelzklebers (4) befestigt ist.

0150377

7. Manschette nach einem der Ansprüche 1 bis 5, dadurch gekennzeichnet, daß der Untertritt (2, 5) mit Hilfe eines Kontaktklebers befestigt ist.

8. Manschette nach einem der Ansprüche 1 bis 5, dadurch gekennzeichnet, daß der Untertritt (2, 5) mit Hilfe eines Primers befestigt ist.

9. Manschette nach einem der Ansprüche 1 bis 5, dadurch gekennzeichnet, daß der Untertritt (2, 5) durch stoffschlüssige Verbindung mit Copolymeren befestigt ist.

10. Manschette nach einem der vorhergehenden Ansprüche, dadurch gekennzeichnet, daß der Untertritt (2, 5) aus wärmeleitfähigem Material besteht.

11. Manschette nach einem der vorhergehenden Ansprüche, dadurch gekennzeichnet, daß der Untertritt (2, 5) aus einer einzigen Schicht besteht.

12. Manschette nach einem der Ansprüche 1 bis 10, dadurch gekennzeichnet, daß der Untertritt (2, 5) aus mehreren Schichten besteht.

13. Manschette nach einem der vorhergehenden Ansprüche, dadurch gekennzeichnet, daß der Untertritt (2) aus Schmelzkleber besteht.

14. Manschette nach einem der Ansprüche 1 bis 12, dadurch gekennzeichnet, daß der Untertritt (5) aus Metall besteht.

15. Manschette nach Anspruch 14, dadurch gekennzeichnet, daß der Untertritt (2, 5) einseitig kaschiert ist.

16. Manschette nach Anspruch 14, d a d u r c h   g e -
k e n n z e i c h n e t ,   daß der Untertritt (5) beidseitig kaschiert ist.

17. Manschette nach einem der vorhergehenden Ansprüche,
d a d u r c h   g e k e n n z e i c h n e t ,   daß der
Untertritt (2, 5) so verlängert ist, daß er zusätzlich
die gesamte, funktionstechnisch erforderliche Fläche der
Manschette (1) bedeckt.

18. Manschette nach einem der Ansprüche 1 bis 17,
d a d u r c h   g e k e n n z e i c h n e t ,   daß der
Untertritt (2, 5) entlang einer Längskante (1') der
Manschette (1) angeordnet ist.

19. Manschette nach einem der vorhergehenden Ansprüche,
d a d u r c h   g e k e n n z e i c h n e t ,   daß der
Untertritt sich über die ganze Breite des Expandats erstreckt.

20. Manschette nach einem der Ansprüche 1 bis 12 und/oder
14 bis 18,   d a d u r c h   g e k e n n z e i c h n e t ,
daß der Untertritt (2, 5) so flexibel ausgebildet ist, daß
er den Schrumpfvorgang nicht behindert.

21. Manschette nach Anspruch 20,   d a d u r c h   g e -
k e n n z e i c h n e t ,   daß der Untertritt (5) Schlitze
(9) bzw. Ausnehmungen (8) im Befestigungsbereich aufweist.

22. Manschette nach einem der vorhergehenden Ansprüche,
d a d u r c h   g e k e n n z e i c h n e t ,   daß der
Untertritt (2, 5) Schichten unterschiedlicher Kleber aufweist.

23. Manschette nach Anspruch 22, d a d u r c h  g e - k e n n z e i c h n e t , daß die einzelnen Kleber unterschiedliche Schmelzpunkte aufweisen.

24. Manschette nach Anspruch 23, d a d u r c h  g e - k e n n z e i c h n e t , daß eine Kleberschicht mit hohem Schmelzpunkt an der Fläche der Manschette (1) und eine Kleberschicht mit niedrigem Schmelzpunkt zur Fläche des abzudichtenden Gegenstandes weisend, im Untertritt (2, 5) angeordnet sind.

25. Manschette nach einem der vorhergehenen Ansprüche, d a d u r c h  g e k e n n z e i c h n e t , daß der Untertritt (2, 5) gleichzeitig als elektromagnetische Schirmung gegen Eindringen von Störfeldern ausgebildet ist.

26. Manschette nach einem der vorhergehenden Ansprüche, d a d u r c h  g e k e n n z e i c h n e t , daß der Untertritt (2, 5) zwei Metallfolien mit einer dazwischen liegenden Gleitschicht enthält.

27. Manschette nach Anspruch 26, d a d u r c h  g e - k e n n z e i c h n e t , daß die Gleitschicht aus einem Schmelzkleber besteht.

28. Manschette nach einem der vorhergehenden Ansprüche, d a d u r c h  g e k e n n z e i c h n e t , daß der Untertritt (2, 5) an den Stirnseiten der Manschette (1) ebenfalls mit Überständen (2') über die Fläche der Manschette (1) hinausragt.

29. Manschette nach Anspruch 28, d a d u r c h  g e - kennzeichnet, daß die stirnseitigen Überstände (2') mit ihren Beschichtungen aus Haftvermittlern (4'') zurückknickbar sind, wobei das Zusammenkleben dieser zurückgeknickten Überstände (4'') mit dem Mittelteil des Untertrittes (2) bei der Montage verhindert ist.

30. Manschette nach einem der vorhergehenden Ansprüche, d a d u r c h   g e k e n n z e i c h n e t , daß die Manschette (1) entlang ihrer Längskanten (1') eine oder mehrere Verstärkungseinlagen (3) aufweist.

31. Manschette nach einem der vorhergehenden Ansprüche, d a d u r c h   g e k e n n z e i c h n e t , daß die Manschette (1) zumindest entlang einer Längskante (1') mit Löchern (16) versehen ist.

32. Manschette nach einem der vorhergehenden Ansprüche, d a d u r c h   g e k e n n z e i c h n e t , daß Verschlußelemente (17) in die Löcher (16) kraftschlüssig, zum Beispiel einknöpfbar, angeordnet sind.

33. Manschette nach einem der vorhergehenden Ansprüche, d a d u r c h   g e k e n n z e i c h n e t , daß die Verschlußelemente (17) im Untertritt (2, 5) eingebracht sind.

34. Manschette nach einem der Ansprüche 1 bis 32,   d a d u r c h   g e k e n n z e i c h n e t , daß die Verschlußelemente (17) auf einem Verschlußband (18) aufgebracht sind und daß das Verschlußband auf dem Untertritt (2, 5) im Bereich der Längskante (1') der Manschette (1) angeordnet ist.

35. Manschette nach einem der vorhergehenden Ansprüche, d a d u r c h   g e k e n n z e i c h n e t , daß die Verschlußelemente (17) als Rast- bzw. Klemmelemente ausgebildet sind.

0150377

83 P 1 9 4 3 E

36. Manschette nach einem der Ansprüche 1 bis 34, d a - d u r c h g e k e n n z e i c h n e t , daß die Ver- schlußelemente (17) als Verhakungselemente ausgebildet sind.

37. Manschette nach einem der vorhergehenden Ansprüche, d a d u r c h g e k e n n z e i c h n e t , daß der Untertritt (2, 5) durch Einknöpfung der auf ihm befestigten Verschlußelemente (17) in die Löcher (16) der Manschette (1) kraftschlüssig an der Manschette (1) befestigt ist.

38. Manschette nach einem der vorhergehenden Ansprüche, d a d u r c h g e k e n n z e i c h n e t , daß der Untertritt (5) durch die Verschlußelemente (17) formschlüssig mit der Manschette (1) verbunden ist.

39. Manschette nach einem der vorhergehenden Ansprüche, d a d u r c h g e k e n n z e i c h n e t , daß der Untertritt (5) so auf der Manschette (1) angeordnet ist, daß er über die Fläche der Manschette (1) nicht hinausragt, wobei dieser Untertritt (5) bei Bedarf über den einen Längsrand (1') zurückfaltbar ist.

40. Manschette nach Anspruch 39, d a d u r c h ge- k e n n z e i c h n e t , daß eine Dichtschicht (4'') auf dem Untertritt (5) angeordnet ist, die im ausgefalteten Zustand die Enden der Verschlußelemente abdeckt.

41. Manschette nach einem der vorhergehenden Ansprüche, d a d u r c h g e k e n n z e i c h n e t , daß der Untertritt (5) flächenmäßig so verlängert ist, daß er zunächst alleine den zu umhüllenden Gegenstand (19) umfaßt.

42. Manschette nach Anspruch 40, d a d u r c h  g e - k e n n z e i c h n e t ,  daß der Untertritt (5) im Flächenbereich der Manschette (1) kürzer ist als die Manschette (1), daß er jedoch im Verschlußbereich gleich lang ist.

43. Manschette nach einem der vorhergehenden Ansprüche, d a d u r c h  g e k e n n z e i c h n e t ,  daß der Untertritt mit Polyethylen vorzugsweise auf der nach außen weisenden Seite beschichtet ist.

44. Manschette nach einem der vorhergehenden Ansprüche, d a d u r c h  g e k e n n z e i c h n e t ,  daß der Untertritt (5) zumindest eine Schicht als Permeations- sperre aufweist.

0150377

1/6

FIG 1

FIG 2

FIG 3

FIG 4

FIG 5

FIG 6

FIG 7

FIG 8

FIG 9

## FIG 10

## FIG 11

## FIG 12

## FIG 13

FIG 14

FIG 15

FIG 16

FIG 17

FIG 18

FIG 19

FIG 20

FIG 21

FIG 22